# EUROPEAN PATENT SPECIFICATION

(11) **EP 0 881 830 B1**
(45) Date of publication and mention of the grant of the patent: **03.04.2002**
(21) Application number: 98303839.9
(22) Date of filing: 15.05.1998
(51) Int. Cl.: H04N 5/775

(54) **Video signal player**
Videosignalwiedergabeanlage
Appareil de reproduction de signal vidéo

(30) Priority: 26.05.1997 JP 13462197
(43) Date of publication of application: 02.12.1998
(73) Proprietor: MATSUSHITA ELECTRIC INDUSTRIAL CO., LTD., Kadoma-shi, Osaka (JP)
(72) Inventor: Hirose, Koji, Hirakata-shi (JP); Tsunematsu, Terutoshi, Katano-shi (JP)
(74) Representative: Hallybone, Huw George

(56) References cited:
- EP-A- 0 325 332
- EP-A- 0 340 131
- PATENT ABSTRACTS OF JAPAN vol. 18, no. 488 (E-1605), 12 September 1994 & JP 06 165052 A (SANYO ELECTRIC), 10 June 1994
- PATENT ABSTRACTS OF JAPAN vol. 13, no. 429 (E-823), 25 September 1989 & JP 01 157680 A (TOSHIBA), 20 June 1989

## Description

### BACKGROUND OF THE INVENTION

### Field of the Invention

The present invention relates to a video signal player which can reproduce video signals and/or audio signals recorded in a recording medium such as a magnetic tape, an optical disc or the like, and particularly relates to a video signal player having a function to convert reproduced video signals and/or audio signals into radio-frequency (RF) signals and output the radio-frequency signals to a television receiver.

### Description of the Related Art

Recently, with the increase of the number of channels in television broadcasting, vacant channels with no broadcast signals have become reduced. In addition, the frequency of broadcast signals and the output frequency of RF converters for converting video signals and/or audio signals into radio-frequency signals in video signal players have become closer to each other, so that interference between these signals has become increased. Therefore, it has become necessary to set the output frequency of a converter means again when a video signal player is installed.

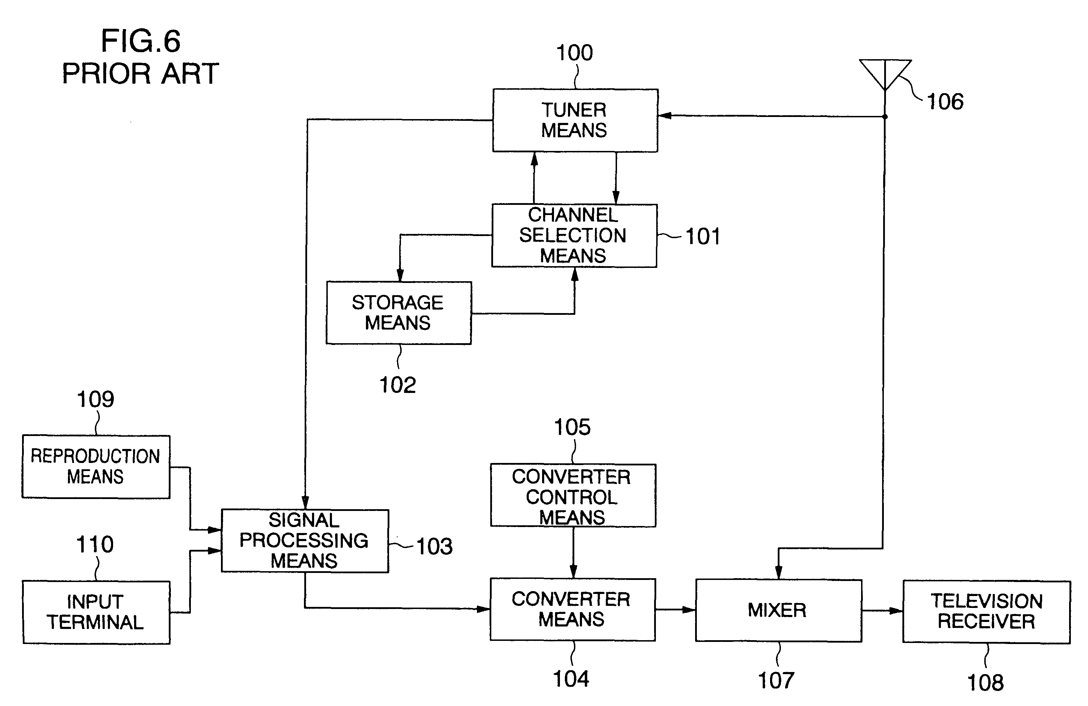

A conventional video signal player will be described with reference to Fig. 6. Fig. 6 is a block diagram illustrating the configuration of a conventional video signal player. The reference numeral 100 represents a tuner means for receiving radio-frequency signals; 101, a channel selection means for supplying channel frequency information of a selection request channel to the tuner means 100, and for judging existence of broadcast signals in the channel on the basis of received video signals or the like; 102, a storage means for storing the channel frequency information of the channel selected by the channel selection means 101; 103, a signal processing means for perform switching so as to output a base band signal of a video signal and/or an audio signal reproduced by a reproduction means 109, a base band signal from the tuner means 100, or a base band signal from an external signal input terminal 110; 104, a converter means for converting the base band signal into a radio-frequency signal; 105, a converter control means for storing channel frequency information which has been set in a factory in advance so as to be changeable and settable manually later, and for outputting this channel frequency information so as to control the converter means 104; 106, an antenna for receiving radio waves and for supplying radio-frequency signals; 107, a mixer for mixing the output of the converter means 104 with the output of the antenna 106; and 108, a television receiver for converting the output of the mixer 107 into video and/or sounds.

Here, the term "channel frequency information" means "information corresponding to a channel number or a channel frequency".

The setting operation of the output frequency of the converter means when the conventional video signal player configured as described above is installed will be described. Whether the channel frequency assigned by the channel frequency information of the converter control means 105 set in advance in a factory is occupied by broadcast signals or not is different in accordance with countries or areas. Therefore, the channel frequency information should be adjusted in accordance with necessity in a state of practical use. An installation operator inputs a base band signal, which is an output of the signal processing means 103, into the converter means 104. The converter means 104 converts the frequency of this base band signal, and outputs a radio-frequency signal having a frequency assigned by the channel frequency information of the converter control means 105. The output of the converter means 104 is supplied to the mixer 107 together with the output of the antenna 106, and then the mixed signal is supplied to the television receiver 108. The installation operator examines whether the channel assigned by the channel frequency information of the converter control means 105 set in a factory is occupied by broadcast signals or not. When the assigned channel is already occupied, the operator selects a channel closest to the assigned channel desirably from vacant channels. Then, the operator inspects, by his/her eyes, the contents of display of the television receiver 108, and judges whether there is, or not, interference with close broadcast signals from the output of the converter means 104 or interference with the output of the converter means 104 from close broadcast signals. If it is determined that there is any interference, the installation operator changes the channel frequency information of the converter control means 105 so as to assign another channel which is not occupied by any broadcast signal, and performs the above-mentioned operation again. If it is determined there is no interference, the operator ends the operation. The reason why a channel the same as or close to the assigned channel habitually used is used as the output channel of the converter means 104 is to reduce the fear of disturbing the conventional sense of channel selection, that is, the channel selection order in channel UP/DOWN operation through a remote controller.

In the above-mentioned conventional structure, however, the output channel of the converter means 104 cannot be set indiscriminately because vacant channels are different in accordance with countries or areas. Accordingly, it is required for a maker, a dealer or a user to change the output channel of the converter means 104. It is therefore necessary for an installation operator to set the channel frequency information of the converter control means 105 while making inspection, by his/her eyes, on the content of display of the television receiver 108 whenever a video signal player is installed. The conventional configuration has such a troublesome problem.

On the other hand, JP-A-6-165052 discloses a device for automatically setting the output channel of an RF converter, the device being provided with an automatically setting means which is designed such that, when it is determined that vacant channels are continuous by an automatic channel search operation, a channel which is positioned substantially at the. center of the continuous vacant channels is selected, and this selected channel is automatically set as the output channel of the RF converter.

According to the above-mentioned automatic setting, though interference from close broadcast signals is indeed reduced, the distance between the output channel of the RF converter and the channel of broadcast signals is increased so that there has been a problem that switching between both the channels in the way of channel selection by means of channel UP/DOWN operation is troublesome, and this operation does not fit for the conventional sense of channel selection.

### SUMMARY OF THE INVENTION

It is therefore an object of the present invention to solve the foregoing problems, and to provide a video signal player automatically setting the output channel of an RF converter to a channel with no interference from broadcast signals while paying regard to the conventional sense of channel selection.

In order to achieve the above object, according to the present invention, provided is a signal player comprising: a tuner means for receiving a radio-frequency signal so as to obtain a first base band signal; a reproduction means for reproducing a recorded signal from a recording medium so as to obtain a second base band signal; a converter means for converting one of a plurality of base band signals including the first base band signal and the second base band signal, into a radio-frequency signal; a mixer for combining the radio-frequency signal input into the tuner means and the radio-frequency signal output from the converter means to thereby output the combined signal; a channel selection means for supplying frequency information of an assigned channel to the tuner means, and for determining whether or not there are broadcast signals with respect to a channel selected by the tuner means; a detection means for giving assignment of a channel to be selected to the channel selection means, and for determining, when N channels continuous within a frequency range in which the converter means can output are not occupied by any broadcast signals, from the N channels, a channel which is at least M channels away from any channel occupied by a broadcast signal and which is closest to a predetermined assigned channel, on the basis of determination of the channel selection means, and outputs frequency information about the determined channel, where M and N are positive integers and N is not smaller than M; and a converter control means for storing the frequency information output from the detection means, and for controlling the converter means on the basis of the stored frequency information.

With this configuration, it is possible to easily detect and set channel frequency information to be set in the converter control means within a channel range not-occupied by any broadcast signals.

### BRIEF DESCRIPTION OF THE DRAWINGS

Fig. 1 is a block diagram illustrating the configuration of a video signal player in a first embodiment of the present invention;
Fig. 2 is a flow chart showing the operation of a detection means in the first embodiment of the present invention;
Fig. 3 is a block diagram illustrating the configuration of a video signal player in a second embodiment of the present invention;
Fig. 4 is a flow chart showing the operation of a detection means in the second embodiment of the present invention;
Fig. 5 is a model diagram showing the result of detection algorithm in the embodiments 1 and 2 of the present invention; and
Fig. 6 is a block diagram illustrating the configuration of a conventional video signal player.

### DESCRIPTION OF THE PREFERRED EMBODIMENTS

Embodiments of a video signal player according to the present invention will be described in detail below with reference to the drawings.

### (Embodiment 1)

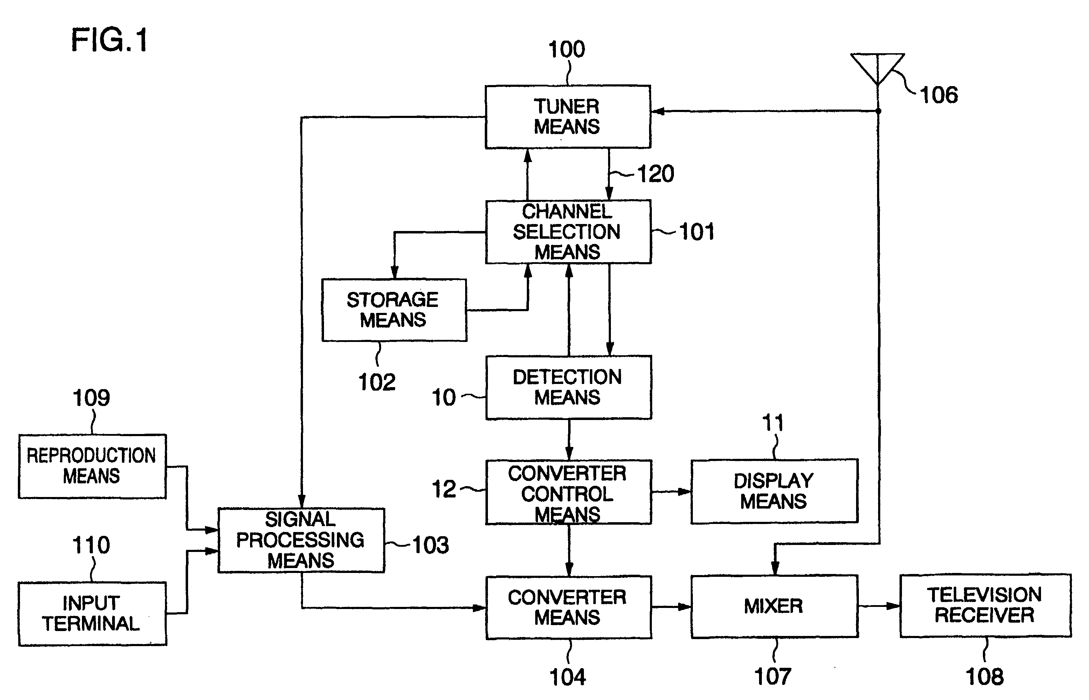

Referring to Figs. 1, 2 and 5, description will be made about the operation to set channel frequency information of a converter control means in a video signal player according to a first embodiment of the present invention.

Fig. 1 is a block diagram illustrating the configuration of a video signal player in the first embodiment of the present invention. In Fig. 1, constituent elements the same as those in Fig. 6 are referenced correspondingly, and description about them will be omitted. A detection means 10 for determining a channel to be used as the output channel of the converter means 104 from vacant channels not-occupied by any broadcast signals is connected to the channel selection means 101. Frequency information of the channel determined by the detection means 10 is supplied to a converter control means 12. The converter control means 12 stores the frequency information of the determined channel, and controls the output channel of the converter means 104 on the basis of the stored frequency information. A display means 11 is provided for displaying the frequency information of the detected channel stored in the converter control means 12. The display means 11 may be a fluorescent display or a liquid-crystal display.

The operation of the video signal player as shown in Fig. 1 will be described below. The detection means 10 gives an instruction to the channel selection means 101 to perform channel selection. In response to this instruction, the channel selection means 101 supplies the channel frequency information of a selection request channel to the tuner means 100, and receives video signals and/or audio signals 120 supplied from the tuner means 100 so that the channel selection means 101 judges whether broadcast signals exist in the selected channel or not. The result of this judgment is stored in the storage means 102, and, at the same time, supplied to the detection means 10. When N channels continuous within a frequency range in which the converter means 104 can output are not occupied by any broadcast signals, the detection means 10 determines, from the N channels, a channel which is at least M channels away from any channel occupied by broadcast signals and which is closest to a predetermined assigned channel, on the basis of the result of judgement of the channel selection means 101, and outputs frequency information about the thus determined channel. Here, M and N are positive integers respectively, and N is not smaller than M. The output of the detection means 10 is supplied to the converter control means 12, and stored therein as the channel frequency information. This channel frequency information output from the converter control means 12 is supplied to the display means 11 and the converter means 104. Consequently, the channel frequency information is displayed on the display means 11, and the output channel of the converter means 104 is thus determined.

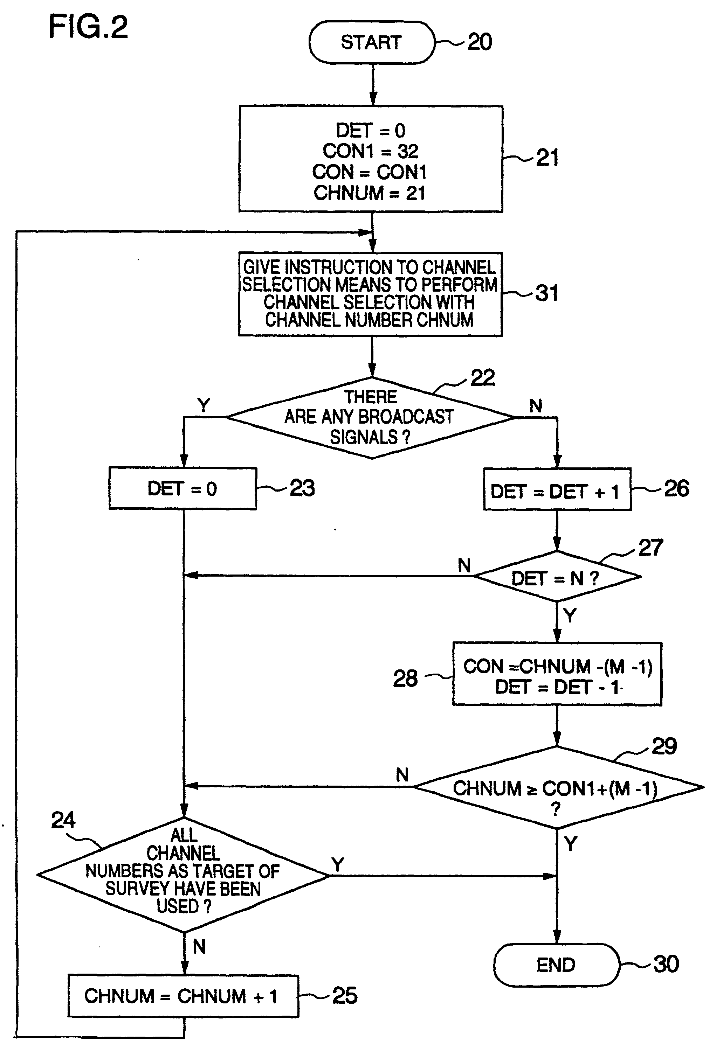

Fig. 2 is a flow chart showing a detection algorithm of the channel frequency information of the detection means 10 in the first embodiment of the present invention. The detection means 10 is provided by a software program in a video signal player having a CPU and memories. Here, an example where N=5 and M=3 is shown. In Step 21, initial value setting is carried out. DET designates a content of a memory for counting the number of continuous vacant channels. CON1 designates a content of a memory for storing the channel number of a predetermined assigned channel. CON designates a content of a memory for storing the channel number of the converter control means 12. CHNUM designates a content of a memory for storing the selection channel number to be given as an instruction to the channel selection means 101. Here, the values are set so that DET=0, CON1=32, CON=32 and CHNUM=21. This means that the predetermined assigned channel is the 32nd channel, and the channel where channel selection starts is the 21st channel. In Step 31, the channel selection means 101 is instructed to perform channel selection with the channel number CHNUM. In Step 22, the channel selection means 101 judges whether there are broadcast signals in the channel number CHNUM or not on the basis of the video signals and/or audio signals 120 received from the tuner means 100. The result of this judgement is stored in the storage means 102 on one hand, and supplied to the detection means 10 on the other. When it is determined that broadcast signals exist, DET is reset in Step 23. In Step 24, checking is made as to whether all the channel numbers as target of survey over the frequency range in which the converter means 104 can output have been used in CHNUM or not. In the case where all the channel numbers have been used, the detection process is moved to Step 30 so as to be ended there. If all the channel numbers have not been used yet, CHNUM is increased by 1 (one) to conduct a survey on the next channel in Step 25. Then, the detection process is moved to Step 31 again. On the other hand, if the judgment in Step 22 proves that there is no broadcast signal, DET is increased by 1 (one) in Step 26, and checking is made in Step 27 as to whether DET has reached N or not. If DET has not reached N, the detection process is moved to Step 24. When DET has reached N, it means that N continuous channels are not occupied by any broadcast signals. In Step 28, the channel number obtained by subtracting (M-1) from the channel number CHNUM which is being subjected to channel selection at present is stored in CON, and DET is decreased by 1 (one). In Step 29, judgment is made as to whether CHNUM has reached a value which is larger than CON1 by (M-1), or not. If the value has been reached, the detection process is moved to Step 30 so as to be ended there. If it is not reached, the detection process is moved to Step 24. The thus obtained value of CON becomes an output of the detection means 10.

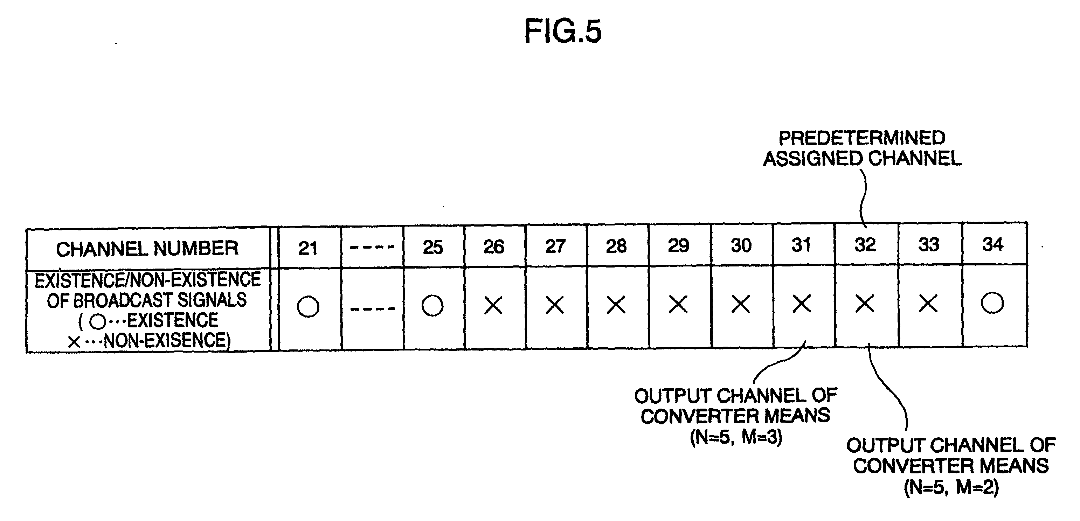

Fig. 5 is a model diagram showing the result of detection using the detection algorithm of the detection means 10 in the first embodiment of the present invention. Now, assume that, of the 21st to 34th channels, the region where there is no broadcast signal over at least N continuous channels, that is, at least 5 continuous channels, is from the 26th channel to the 33rd channel. In the case where N=5 and M=3, as the result of the detection algorithm, the channel number 31 is set as the output of the converter control means 12, and a frequency corresponding to the channel number 31 is obtained as the output frequency of the converter means 104. In the case where N=5 and M=2, on the other hand, the 32nd channel the same as the predetermined assigned channel is obtained. The channel closest to the predetermined channel number 32 can be detected automatically under predetermined conditions. Consequently, it is possible to use a channel the same as or near the assigned channel habitually used as the output channel of the converter means 104. Accordingly, there is little fear of hurting the sense of operation in channel selection.

As has been described above, according to this embodiment, it is possible to easily set a channel closest to a predetermined channel number as the channel frequency information of the converter control means 12. Accordingly, it is not necessary for a setting operator to set the channel frequency information of the converter control means 105 while making inspection, by his/her eyes, on the display content of the television receiver 108 whenever a video signal player is installed.

In the above description, there was described an example of detection of a channel which is at least 3 or 2 channels away from any channel occupied by broadcast signals when there is no broadcast signal over continuous 5 or more channels. When channels occupied by broadcast signals are away from each other sufficiently like this, interference with close broadcast signals from the spurious output of output signals of the converter means 104, or interference with the output of the converter means 104 from the spurious output of close broadcast signals is so small that a preferred result can be obtained on the screen of the television receiver 108. However, when channels having no broadcast signal are obtained at every second channel, the expected result cannot be obtained by the above-mentioned combination of M and N. In this case, it will go well if N=1 and M=1. However, in this case there is a possibility of interference suffered from the spurious output from adjacent channels. An algorithm in which the value N and/or the value M is decreased one by one may be used in the case where channel setting cannot be done under the conditions of the values M and N established at the initial time.

### (Embodiment 2)

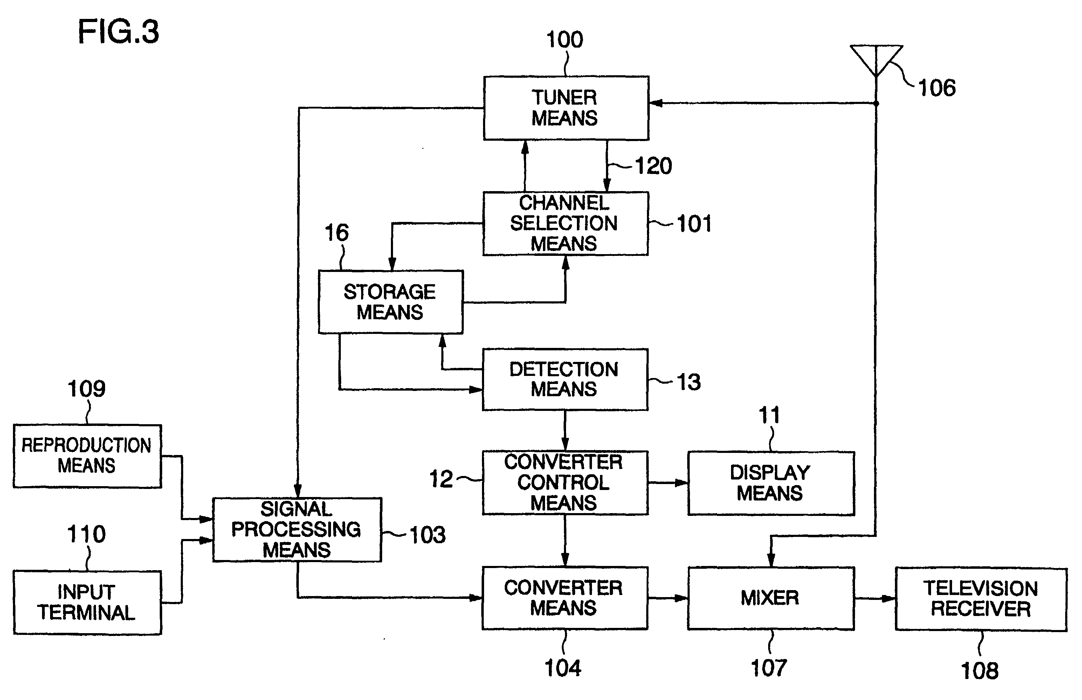

Referring to Figs. 3, 4 and 5, description will be made about the operation to set channel frequency information of a converter control means in a video signal player according to a second embodiment of the present invention. Fig. 3 is a block diagram illustrating the configuration of a video signal player in the second embodiment of the present invention. In Fig. 3, constituent elements the same as those in Fig. 1 are referenced correspondingly, and description about them will be omitted. A storage means 16 stores the result of judgement, upon all the channels within a frequency range in which the converter means 104 can output, as to whether broadcast signals exist or not corresponding to the frequency designated by frequency information of any channel selected in the channel selection means 101. The storage means 16 outputs the stored content in response to a request from the detection means 13. On the basis of the result of judgement stored in the storage means 16, the detection means 13 supplies frequency information of a channel determined, in the same manner as in the first embodiment, to the converter control means 12.

The operation of the video signal player as shown in Fig. 3 will be described below. The channel selection means 101 supplies channel frequency information of a selection request channel to the tuner means 100 upon all the channels within the frequency range in which the converter means 104 can output, and receives video signals and/or audio signals 120 supplied from the tuner means 100 to thereby judge whether broadcast signals exist or not in the selected channel. The result of this judgement is stored as data in the storage means 16. When N channels continuous within the frequency range in which the converter means 104 can output are not occupied by any broadcast signals, the detection means 13 determines, of those N channels, a channel closest to a predetermined assigned channel in a frequency band which is at least M channels away from any channel occupied by broadcast signals, on the basis of the data from the storage means 16. The output of the detection means 13 is supplied to the converter control means 12, and stored therein as the channel frequency information. This channel frequency information output from the converter control means 12 is supplied to the display means 11 and the converter means 104. Consequently, the channel frequency information is displayed on the display means 11, and the output channel of the converter means 104 is thus determined.

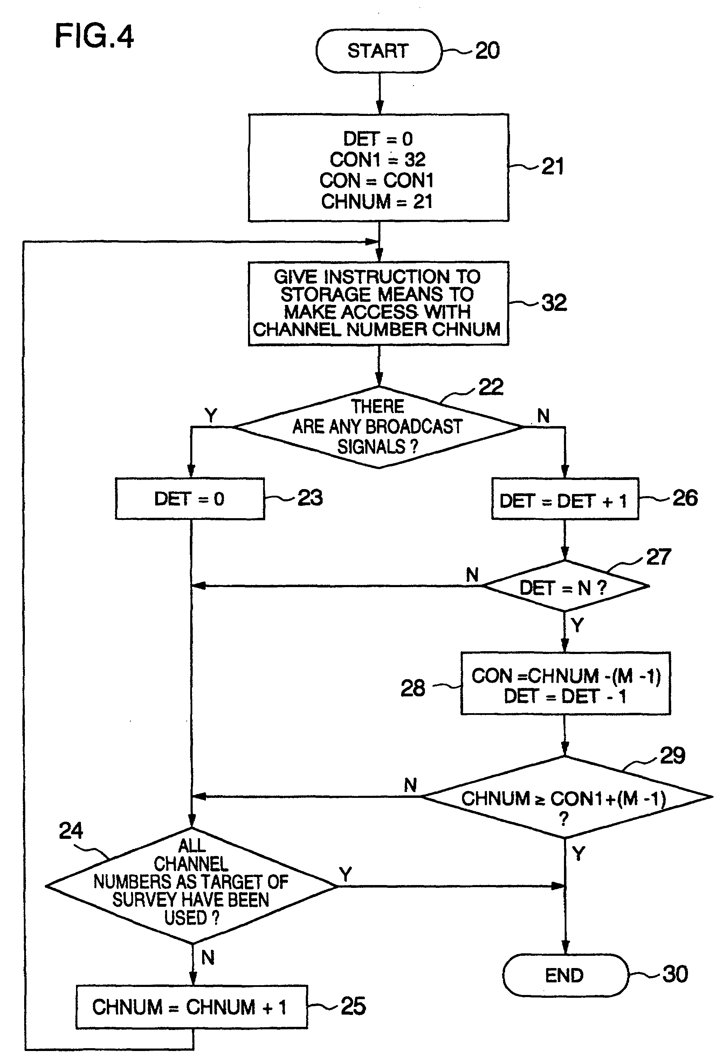

Fig. 4 is a flow chart showing a detection algorithm of the channel frequency information of the detection means 13 in the second embodiment of the present invention. The detection means 13 is provided by a software program in a video signal player having a CPU and memories. Here, an example where N=5 and M=3 is shown. In Step 21, initial value setting is carried out. DET designates a content of a memory for counting the number of continuous vacant channels. CON1 designates a content of a memory for storing the number of a predetermined assigned channel. CON designates a content of a memory for storing the channel number of the converter control means 12. CHNUM designates a content of a memory for storing the channel number for making access to the storage means 16. Here, the values are set so that DET=0, CON1=32, CON=32 and CHNUM=21. This means that the predetermined assigned channel is the 32nd channel, and the channel where channel selection starts is the 21st channel. In Step 32, access is made to the storage means 16 with the channel number CHNUM. In Step 22, judgment is made as to whether broadcast signals exist or not in the channel number CHNUM. If the judgement proves that broadcast signals exist, DET is reset in Step 23. In Step 24, checking is made as to whether all the channel numbers as target of survey over the frequency range in which the converter means 104 can output have been used in CHNUM or not. In the case where all the channel numbers have been used, the detection process is moved to Step 30 so as to be ended there. If all the channel numbers have not been used yet, CHNUM is increased by 1 (one) to conduct a survey on the next channel in Step 25. Then, the detection process is moved to Step 32 again. On the other hand, if the judgment in Step 22 proves that there is no broadcast signal, DET is increased by 1 (one) in Step 26, and checking is made in Step 27 as to whether DET has reached N or not. If DET has not reached N, the detection process is moved to Step 24. When DET has reached N, it means that N continuous channels are not occupied by any broadcast signals. In Step 28, the channel number obtained by subtracting (M-1) from the current channel number CHNUM is stored in CON, and DET is decreased by 1 (one). In Step 29, judgment is made as to whether CHNUM has reached a value which is larger than CON1 by (M-1), or not. If the value has been reached, the detection process is moved to Step 30 so as to be ended there. If it is not reached, the detection process is moved to Step 24. The thus obtained value of CON becomes an output of the detection means 13.

Also in the second embodiment of the present invention, a result similar to that in the first embodiment can be obtained through the above operation. Further, the storage means 16 is used effectively not only in the case of ordinary reception but also in the case of setting the output channel of the converter means.

As has been described above, according to the present invention, it is not necessary for a setting operator to set the channel frequency information of the converter control means while making inspection, by his/her eyes, on the content of display of the television receiver whenever a video signal player is installed. In addition, it is possible to use a channel the same as or near an assigned channel habitually used as the output channel of the converter means. Accordingly, it is possible to obtain a superior effect in that there is little fear of disturbing the conventional sense of operation in channel selection.

## Claims

1. A signal player comprising:
a tuner means (100) for receiving a radio-frequency signal so as to obtain a first base band signal;
a reproduction means (109) for reproducing a recorded signal from a recording medium so as to obtain a second base band signal;
a converter means (104) for converting one of a plurality of base band signals including said first base band signal and said second base band signal, into a radio-frequency signal;
a mixer (107) for combining the radio-frequency signal input into said tuner means (100) and the radio-frequency signal output from said converter means (104) to thereby output the combined signal;
a channel selection means (101) for supplying frequency information of an assigned channel to said tuner means (100), and for determining whether or not there are broadcast signals with respect to a channel selected by said tuner means (100);
a detection means (10 or 13) for giving assignment of a channel to be selected to said channel selection means (101), and for determining, when N channels continuous within a frequency range in which said converter means (104) can output are not occupied by any broadcast signals, from said N channels, a channel which is at least M channels away from any channel occupied by a broadcast signal and which is closest to a predetermined assigned channel, on the basis of determination of said channel selection means (101), and outputs frequency information about the determined channel, where M and N are positive integers and N is not smaller than M; and
a converter control means (12) for storing said frequency information output from said detection means (10 or 13), and for controlling said converter means (104) on the basis of said stored frequency information.

2. A signal player according to Claim 1, further comprising:
a storing means (16) for storing said determination of said channel selection means (101); and
said detection means (13) outputting frequency information of a channel determined on the basis of said determination stored in said storage means (16).

3. A signal player according to Claim 1 or 2, further comprising:
a display means (11) for displaying said frequency information stored in said converter control means (12).

## Patentansprüche

1. Signalwiedergabegerät aufweisend:
einen Tuner (100), welcher ein Radiofrequenzsignal empfängt, so dass ein erstes Basisbandsignal erhalten wird;
eine Wiedergabeeinrichtung (109), welche ein aufgezeichnetes Signal von einem Aufzeichnungsmedium wiedergibt, um ein zweites Basisbandsignal zu erhalten;
eine Wandlereinrichtung (104), welche eines von einer Mehrzahl von Basisbandsignalen, die das erste und das zweite Basisbandsignal beinhalten, in ein Radiofrequenzsignal umwandeln;
einen Mischer (107), welcher das dem Tuner (100) zugeführte Radiofrequenzsignal und das von der Wandlereinrichtung (104) ausgegebene Radiofrequenzsignal kombiniert, um dadurch das kombinierte Signal auszugeben;
eine Kanalauswahleinrichtung (101), welche den Tuner mit Frequenzinformation eines zugewiesenen Kanals versorgt und bestimmt, ob bezüglich eines vom Tuner (100) ausgewählten Kanals Rundfunksignale vorhanden sind oder nicht;
eine Erfassungseinrichtung (10 oder 13), welche eine Zuweisung eines auszuwählenden Kanals an die Kanalauswahleinrichtung (101) liefert und, wenn N Kanäle, die fortlaufend innerhalb eines Frequenzbereiches liegen, in welchem die Wandlereinrichtung (104) ausgeben kann, nicht von irgendwelchen Rundfunksignalen belegt sind, aus diesen N Kanälen einen Kanal bestimmt, der mindestens M Kanäle von jeglichem durch einen Rundfunkkanal belegten Kanal entfernt liegt und der am nächsten bei einem vorbestimmten zugewiesenen Kanal liegt, und zwar auf Basis der Bestimmung der Kanalauswahleinrichtung (101), und gibt die Frequenzinformation über dem bestimmten Kanal aus, wobei M und N positive ganze Zahlen sind und N nicht kleiner als M ist, und
eine Wandler-Steuereinrichtung (12), welche die von der Erfassungseinrichtung (10 oder 13) ausgegebene Frequenzinformation speichert und die Wandlereinrichtung auf Basis der gespeicherten Frequenzinformation steuert.

2. Signalwiedergabegerät nach Anspruch 1 weiter aufweisend:
eine Speichereinrichtung (16), welche die Bestimmung der Kanalauswahleinrichtung (101) speichert; und
die Erfassungseinrichtung (13), welche Frequenzinformation eines Kanals ausgibt, der auf Basis der in der Speichereinrichtung (16) gespeicherten Bestimmung festgelegt wurde.

3. Signalwiedergabegerät nach Anspruch 1 oder 2 weiter aufweisend:
eine Anzeigeeinrichtung (11), welche die in der Wandler-Steuereinrichtung (12) gespeicherte Frequenzinformation anzeigt.

## Revendications

1. Appareil de reproduction de signal, comprenant :
un moyen syntoniseur (100) pour recevoir un signal radiofréquence afin d'obtenir un premier signal de bande de base;
un moyen de reproduction (109) pour reproduire un signal enregistré à partir d'un support d'enregistrement afin d'obtenir un deuxième signal de bande de base;
un moyen convertisseur (104) pour convertir un parmi plusieurs signaux de bande de base comprenant ledit premier signal de bande de base et ledit deuxième signal de bande de base en un signal radiofréquence;
un mélangeur (107) pour combiner l'entrée du signal radiofréquence dans ledit moyen mélangeur (100) et la sortie du signal radiofréquence dudit moyen convertisseur (104) pour délivrer ainsi le signal combiné;
un moyen de sélection de voie (101) pour fournir une information de fréquence d'une voie affectée audit moyen syntoniseur (100), et pour déterminer s'il y a ou non des signaux radiodiffusés par rapport à une voie sélectionnée par ledit moyen syntoniseur (100);
un moyen de détection (10 ou 13) pour donner une affectation d'une voie à sélectionner audit moyen de sélection de voie (101), et pour déterminer, lorsque N voies successives dans une gamme de fréquences dans laquelle ledit moyen convertisseur (104) peut délivrer un signal ne sont pas occupées par des signaux de radiodiffusion quelconques, à partir desdites voies N, une voie qui est écartée d'au moins M voies de n'importe quelle voie occupée par un signal de radiodiffusion et qui est la plus rapprochée d'une voie affectée prédéterminée, sur la base de la détermination dudit moyen de sélection de voie (101), et délivre une information de fréquence concernant la voie déterminée, où M et N sont des entiers positifs et N n'est pas inférieur à M; et
un moyen de commande de convertisseur (12) pour stocker ladite sortie d'information de fréquence dudit moyen de détection (10 ou 13), et pour commander ledit moyen convertisseur (104) sur la base de ladite information de fréquence stockée.

2. Appareil de reproduction de signal selon la revendication 1, comprenant en outre :
un moyen de stockage (16) pour stocker ladite détermination dudit moyen de sélection de voie (101); et
ledit moyen de détection (13) délivrant une information de fréquence d'une voie déterminée sur la base de ladite détermination stockée dans ledit moyen de stockage (16).

3. Appareil de reproduction de signal selon la revendication 1 ou 2, comprenant en outre :
un moyen d'affichage (11) pour afficher ladite information de fréquence stockée dans ledit moyen de commande de convertisseur (12).
